# EUROPEAN PATENT SPECIFICATION

(11) **EP 3 302 817 B1**
(45) Date of publication and mention of the grant of the patent: **28.04.2021**
(21) Application number: 16735690.6
(22) Date of filing: 01.06.2016
(51) Int. Cl.: B05B 7/00, B01F 5/04, B05B 7/04, B01F 3/04, B01F 15/00, B60S 3/04, B01F 5/02

(54) **FOAM DISPENSING DEVICE**
SCHAUMSPENDER
DISPOSITIF DE DISTRIBUTION DE MOUSSE

(30) Priority: 03.06.2015 IT UB20151450
(43) Date of publication of application: 11.04.2018
(73) Proprietor: STRACCIA, Marcello, 63074 San Benedetto Del Tronto (AP) (IT)
(72) Inventor: STRACCIA, Marcello, 63074 San Benedetto Del Tronto (AP) (IT)
(74) Representative: Casadei, Barbara
(86) International application number: PCT/IB2016/053230
(87) International publication number: WO 2016/193925

(56) References cited:
- WO-A1-2015/067989
- DE-A1- 2 943 888
- US-A- 4 925 109
- US-A- 5 704 991
- US-B1- 6 293 290

## Description

### Technical field

This invention relates to a foam dispensing device and a car wash system comprising the device.

### Background art

The need is felt in car washing systems of washing the bodywork of vehicles, such as, for example, automobiles, motorcycles, lorries, vans and coaches, without the aid of brushes or rags.

The removal of the dirt from the surface of the bodywork of the vehicles is mainly determined by the action of detergent-based products dispensed preferably in the form of foam.

In this regard, the physical state of the foam dispensed in these systems is a characteristic of considerable importance since a greater adherence and time of the foam on the bodywork of the vehicle to be treated results in excellent cleaning results.

Known device for producing foam use for cleaning cars, or vehicles in general, are described in documents US6293290, WO2015/067989, US4925109, DE2943888, US5704991.

### Disclosure of the Invention

In this context, one aspect of this invention is that of providing a foam dispensing device which comprises a mixer body which has a main conduit equipped with an opening for introducing pressurised foam or mixture. The mixer body has at least one conduit for introducing water under pressure and at least one conduit for introducing a detergent product in the main conduit or, alternatively, a single conduit for introducing water under pressure mixed with the detergent product in the main conduit. The mixer body has at least one conduit for introducing compressed air into a chamber for mixing water and detergent product, positioned along the main conduit and in fluid communication with the emission opening.

The mixing chamber is configured for generating by interference of the flows of water, detergent product and compressed air against the respective walls the above-mentioned pressurised foam or mixture. The device comprises injection means for injecting at least water and detergent in the mixing chamber with at least a nozzle for introducing at least the pressurised water in the mixing chamber. The injection means are defined at least partly by a respective stretch (T) of the main conduit having a variable cross section with a diverging extension; the stretch (T) has an inlet opening and an outlet opening for at least water and detergent; the cross section of the outlet opening has a cross section larger than the cross section of the inlet opening; the stretch (T) placing in fluid communication the nozzle with the mixing chamber.

Advantageously, the mixer body allows a foam or mixture of water, detergent and pressurised air to be generated having an adhesive effect on the bodywork of the vehicles which is able to dissolve more the dirt during the time the foam or mixture is present, compared with the foam delivered by prior art devices.

### Brief description of the drawings

The invention is described below with reference to the accompanying drawings, which illustrate a non-limiting embodiment of it, in which:

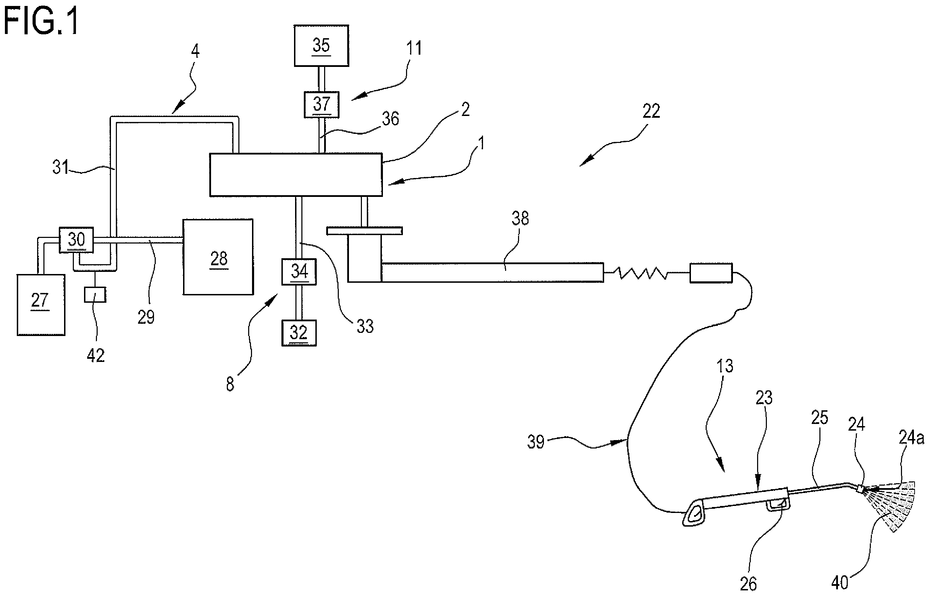

- Figure 1 is a schematic view of a car washing system comprising the foam dispensing device according to the invention;
- Figure 2 is a schematic cross section view of the foam dispensing device according to the invention according to a first embodiment;
- Figure 3 is a schematic cross section view of the foam dispensing device according to the invention according to a second embodiment;
- Figure 4 is a schematic cross section view of the foam dispensing device according to the invention according to a third embodiment.

### Detailed description of preferred embodiments of the invention

With reference to the accompanying drawings, the numeral 1 denotes a foam dispensing device according to the invention.

The foam dispensing device 1 comprises a mixer body 2.

The mixer body 2 has a main conduit 2a.

The main conduit 2a has a main longitudinal extension along the mixer body 2.

The mixer body 2 has at least one conduit 3 for introducing pressurised water 7 in fluid communication with the main conduit 2a.

The conduit 3 for introducing pressurised water 7 may extend along the main axis of longitudinal extension of the main conduit 2a or intercept transversely the main conduit 2a, in particular in a direction at right angles.

Preferably, the device 1 has a plurality of conduits 3 for introducing pressurised water 7 in fluid communication with the main conduit 2a.

More specifically, the mixer body 2 has an conduit 3 for introducing water 7 extending along the main longitudinal axis of extension of the main conduit 2a and at least a conduit 3 for introducing water 7 positioned in a direction transversal to the main conduit 2a, in particular at right angles.

Preferably, the mixer body 2 has two conduits 3 for introducing water 7 located at opposite sides of the main conduit 2a, in particular along a direction transversal to the main conduit 2a, in particular at right angles.

The conduit 3 for introducing water 7 is configured to be connected to a respective system 4 for dispensing water 7.

Advantageously, during installation of the device 1, the plurality of conduits 3 for introducing water 7 allow the operator to opt for the inlet conduit 3 which is most convenient on the basis of the connections of the supply system 4.

It should be noted that, once the inlet conduit 3 is connected to the supply network 4, any further inlet conduits 3 are capped with respective closing elements 41.

The system 4 for supplying water 7 comprises at least one pump 27 for drawing water 7 from a respective storage tank 28.

Preferably, the accumulation tank 28 is connected to the national water mains.

The dispensing system 4 comprises a delivery conduit 29 which connects the pump 27 to the tank 28.

Along the delivery conduit 29 there is a pressure variator 30 configured to give to the water 7, drawn from the tank 28, a predetermined supply pressure to the mixer body 2.

Preferably, the water 7 flowing out from the variator 30 has a variable pressure ranging from 5 to 6 bar, inclusive.

Downstream of the pressure variator 30 there is a pressure gauge 42.

The dispensing system 4 comprises, at the outlet from the variator 30, a conduit 31 for supplying water 7 under pressure to the mixer body 2.

The supply conduit 31 is connected to the inlet conduit 3 of the mixer body 2, preferably by a lead nut and screw type coupling.

The mixer body 2 has at least one conduit 5 for introducing a detergent product 6 in fluid communication with the main conduit 2a.

The term detergent 6 means a substance or mixture which has the ability to remove dirt.

Alternatively, the term detergent 6 means a substance or mixture which has the capacity to polish the bodywork of the vehicle.

It should be noted that the mixer body 2 may comprise a conduit 5 for introducing detergent product 6 which has the capacity to remove the dirt and, furthermore, conduit 5 for introducing detergent product 6 which has the capacity to polish the bodywork of the vehicle.

According to the embodiments illustrated, along the main conduit 2a and with reference to the direction of the flow of the fluids, the conduit 5 for introducing detergent product 6 is located downstream of the conduit 3 for introducing the pressurised water 7.

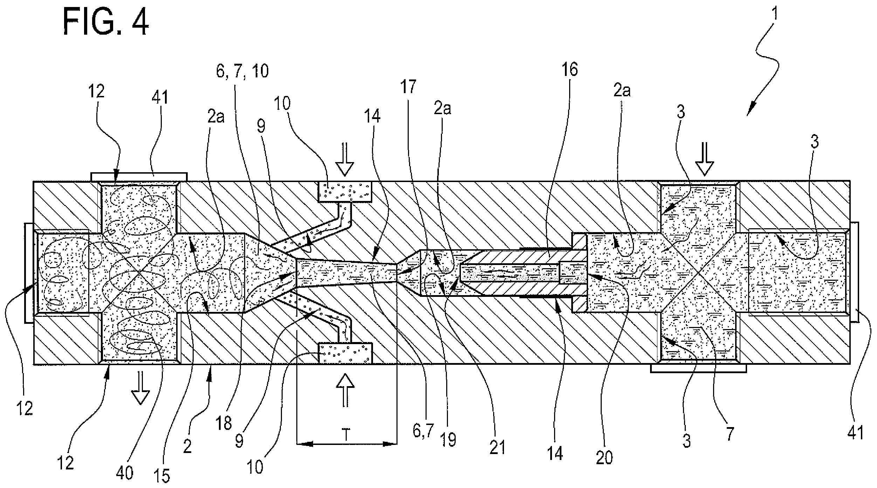

In a variant embodiment illustrated in Figure 4, the mixer body 2 has at least one conduit 3 for introducing the water 7 and detergent 6 already mixed.

The conduit 5 for introducing detergent product 6 intercepts the main conduit 2a along a transversal direction of extension, preferably at right angles.

The conduit 5 for introducing detergent product 6 is configured to be connected with a respective system 8 for dispensing detergent product 6.

The system 8 for dispensing the detergent product 6 comprises at least a tank 32 for storing detergent product 6 and a conduit 33 for supplying detergent product 6 to the mixer body 2.

Preferably, along the supply conduit 33, the system 8 comprises a dosing pump 34, preferably micrometric.

The dosing of the detergent product 6 defined by the dosing pump 34 is a function at least of the supply pressure of the water 7.

The mixer body 2 has at least one conduit 9 for introducing compressed air 10 in fluid communication with the main conduit 2a.

According to the embodiments illustrated, along the main conduit 2a and with reference to the direction of the flow of the fluids, the conduit 9 to for introducing the compressed air 10 is located downstream of the conduit 3 for introducing the pressurised water 7.

The conduit 9 for introducing compressed air 10 intercepts the main conduit 2a along a transversal direction of extension, preferably at right angles.

The conduit 9 for introducing compressed air 10 is configured to be connected with a respective system 11 for supplying compressed air 10.

The system 11 for supplying compressed air 10 comprises at least one compressor 35 and a conduit 36 for supplying compressed air 10 which connects the compressor 35 to the mixer body 2.

Preferably, along the conduit 36 for supplying the compressed air 10, the system 11 comprises a pressure regulator 37 configured to give the air 10 a predetermined supply pressure to the mixer body 2.

Preferably, the water 10 flowing out from the regulator 37 has a variable pressure ranging from 4 to 5 bar, inclusive.

The dosing of the detergent product 6 defined by the dosing pump 34 is a function of the supply pressure of the compressed air 10.

Preferably, the dosing of the detergent product 6 defined by the dosing pump 34 is a function both of the supply pressure of the water 7 and the supply pressure of the compressed air 10.

The mixer body 2 has at least an opening 12 for introducing pressurised foam 40 or mixture comprising at least water, detergent and air.

The emission opening 12 leads into the main conduit 2a.

The user of the device 1 is in fluid communication with the emission opening 12.

Preferably, the mixer body 2 has a plurality of emission openings 12.

More specifically, the mixer body 2 has an emission opening 12 extending along the main longitudinal axis of the main conduit 2a and at least one emission opening 12 positioned in a direction transversal to the main conduit 2a, preferably at right angles. More specifically, the mixer body 2 has two emission openings 12 located at opposite sides of the main conduit 2a, in a direction transversal to the main conduit 2a, preferably at right angles.

Advantageously, during installation of the device 1, the plurality of emission openings 12 allow the operator to opt for the opening 12 which is most convenient on the basis of the connections of the user.

According to the invention, the mixer body 2 comprises, along the main conduit 2a, means 14 for injecting at least water 7 and detergent 6 into a chamber 15 for mixing water 7 and detergent 6 with at least the compressed air 10.

Preferably, the injection means 14 and the mixing chamber 15 are positioned along the main conduit 2a, in particular along the main axis of longitudinal extension of the main conduit 2a.

The mixing chamber 15 is configured for generating by interference of the flows of water 7, detergent product 6 and compressed air with the walls of the mixing chamber 15 the above-mentioned pressurised foam 40 or mixture.

The mixing chamber 15 possesses, at least partly, a truncated cone shape with an increasing cross section, considering the direction of feeding the fluids in the mixer body 2.

The mixing chamber 15 leads into the emission opening 12.

The mixer body 2 has a chamber 19 for inflow of at least the pressurised water 7 and the detergent 6, located upstream of the mixing chamber 15, with reference to the direction of flow of the fluids in the mixer body 2.

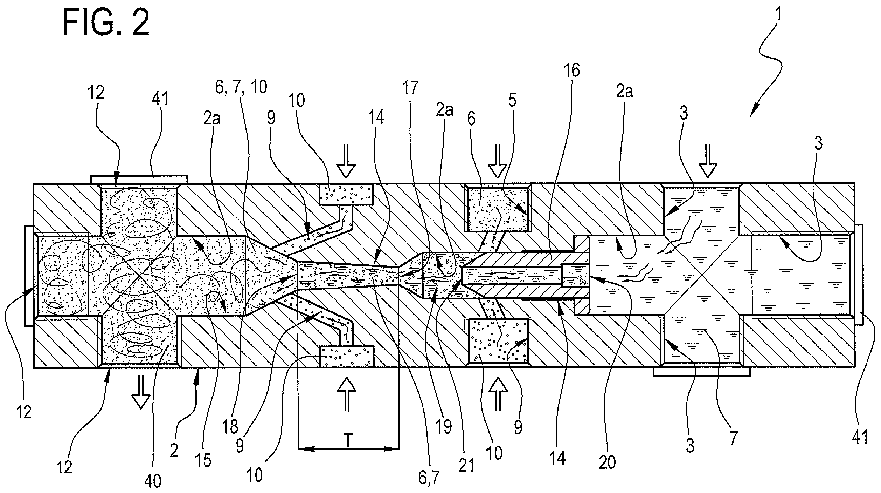

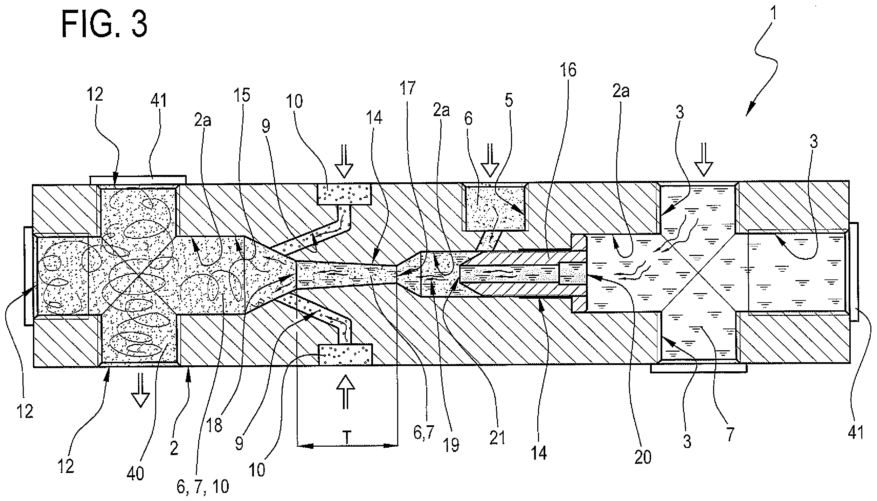

According to the variants of Figure 2 and 3, the mixer body 2 has at least one conduit 5 for introducing detergent product 6 into the inflow chamber 19.

According the a variant embodiment illustrated in Figure 2, the mixer body 2 comprises at least a conduit 9 for introducing the air compressed 10 into the inflow chamber 19.

In this alternative embodiment, the pressurised water 7, the detergent 6 and the compressed air 10 flows into the inflow chamber 19.

According to a variant embodiment illustrated in Figure 3, the mixer body 2 does not have conduit 9 for introducing the air compressed 10 into the inflow chamber 19.

The injection means 14 comprise a nozzle 16 for introducing at least water 7 into the mixing chamber 15.

It should be noted that if the device 1 has a single conduit 3 for introducing water 7 mixed with the detergent product 6, the nozzle 16 introduces into the mixing chamber 15 the water 7 mixed with the detergent product 6, as shown in Figure 4.

It should be noted that if the device 1 has a single conduit 3 for introducing water 7 mixed with the detergent product 6, the nozzle 16 introduces into the inflow chamber 19 the water 7 mixed with the detergent product 6.

The nozzle 16 is preferably a body extending along the main longitudinal axis of the main conduit 2a.

The nozzle 16 for introducing water has a inlet opening 20, in fluid communication with the conduit 3 for introducing the water 7, and an outlet opening 21 of the water 7 having a smaller cross section than the cross section of the inlet opening 20.

The nozzle 16 is positioned along a respective stretch of the main conduit 2a, in particular using a lead nut and screw type coupling.

The nozzle 16 is preferably interposed between the conduit 3 for introducing the water 7 and the inflow chamber 19.

According to variant of Figures 2 and 3, the conduit 5 for introducing detergent 6 leads into the inflow chamber 19, preferably upstream of the outlet opening 21 of the nozzle 16 considering the direction of flow of the fluids inside the mixer body 2, in such a way that the pressurised water 7 flowing out from the nozzle 16 conveys the detergent 6 along the main conduit 2a.

According to the variant illustrated in Figure 2, the conduit 9 for introducing compressed air 10 lead into the inflow chamber 19, in particular upstream of the outlet opening 21 of the nozzle 16.

The injector means 14 are defined at least partly by a respective stretch T of the main conduit 2a having a variable cross section with a diverging extension.

The stretch T places in fluid communication the nozzle 16 with the mixing chamber 15, in particular it is interposed between the inflow chamber 19 and the mixing chamber 15.

It should be noted that the stretch T of the main conduit and the above-mentioned nozzle 16 extend along the same main longitudinal axis, in such a way that the nozzle 16, through the divergent stretch T of the main conduit 2a, directly conveys the flow of fluids introduced into the mixing chamber 15.

The stretch T has a inlet opening 17, in communication with the inflow chamber 19, and an outlet opening 18, in communication with the mixing chamber 15, having a cross section larger than the inlet opening 17.

The inflow chamber 19 leads directly into the stretch T of the main conduit 2a.

More specifically, the inflow chamber 19 has a convergent section to the stretch T.

The stretch T leads directly into the mixing chamber 15.

The cross section of the outlet opening 18 of the stretch T is less than the cross section of the mixing chamber 15.

More specifically, the cross section of the mixing chamber 15 has a diverging extension from the outlet opening 18 of the stretch T, with reference to the direction of flow of the fluids.

Advantageously, by using the stretch T of the main conduit 2a with a divergent extension, a Venturi effect is obtained increasing the pressure, in particular from the inflow chamber 19 to the mixing chamber 15.

The nozzle (16), the inflow chamber (19), the stretch (T) and the mixing chamber (15) extend along the main longitudinal axis of extension of the main conduit (2a).

With reference to the invention, the mixer body 2 comprises one or more conduits 9 for introducing compressed air 10 leading into the mixing chamber 15.

Each conduit 9 for introducing compressed air 10 into the mixing chamber 15 is configured for introducing the fluid along a direction incident to the flow of the fluids dispensed into the mixing chamber 15.

More specifically, the conduit 9 for introducing compressed air 10 is inclined relative to the main longitudinal extension of the main conduit 2a.

Preferably, the mixer body 2 comprises at least two conduits 9 for introducing compressed air 10 inside the mixing chamber 15, positioned on opposite sides relative to the main conduit 2a.

The flows of compressed air 10 deriving from the respective conduits 9 into the mixing chamber 15 are convergent to each other.

Advantageously, this makes it possible to make inside the mixing chamber 15 a turbulence which forces the fluids introduced to strike against the walls of the chamber 15, increasing the compression.

This invention also relates to a car washing system 22 comprising the foam dispensing device 1 and a dispensing lance 23, in fluid communication with the device 1.

The dispensing lance 23 defines, for example, the above-mentioned user of the device 1.

More specifically, the dispensing lance 23 is connected to the device 1 for dispensing foam 40 by means of at least a rotatable arm 38 and a flexible hose 39 connecting the lance to the rotatable arm 38.

The foam 40 or mixture thus created is channelled in the arm 38 of the track and then in the hose 39 and lastly in the dispensing lance 23.

According to a first variant embodiment, the dispensing lance 23 comprises an outlet conduit 25.

The dispensing lance 23 has, at the end of the outlet conduit 25, a nozzle 24 configured for dispensing the pressurised mixture 40 flowing out from the device 1 in the form of adhesive foam 40.

The nozzle 24 of the dispensing lance 23 defines means for spraying foam 40 out from the 1.

The nozzle 24 has a dispensing opening 24a having a smaller cross section than the emission opening 12 of the mixer body 2.

This reduction in cross section allows the foam 40 or pressurised mixture of water, detergent and air or foam to break down into micro-bubbles.

Advantageously, the foam 40 broken down into micro-bubbles allows it to adhere to the bodywork of the vehicle, remaining there for a few minutes and allowing the dirt to dissolve totally.

More specifically, the dispensing opening 24a of the nozzle 24 has a rectangular cross section for dispensing the foam 40 according to a fan-style configuration.

It should be noted that the dispensing lance 23, according to a variant embodiment, comprises at least two outlet conduits 25 one of which has at its end the above-mentioned nozzle 24.

In this embodiment, the dispensing lance 23 comprises an exchange valve, not illustrated, which can be operated by the user for conveying the foam 40 or mixture under pressure flowing out from the device 1 inside the outlet conduit 25 having the above-mentioned nozzle 24.

Preferably, the exchange valve is operated by a trigger 26 which can be actuated by the user.

The valve is manually operated by the user by means of the trigger 26 to allow the dispensing of the foam broken down into micro-bubbles.

Without operating the trigger 26, the foam leaving the mixer body 2 is dispensed by the conduit 25 without the nozzle 24.

Advantageously, the system is conceived for being applied to any track system of any make.

The final effect is that of being able to wash the automobile without the aid of brushes or rags.

Its purpose is to create the foam 40 by means of the dispensing device 1 and the foam 40 foam broken down into micro-bubbles by means of the nozzle 24 of the dispensing lance 23.

## Claims

1. A foam dispensing device comprising a mixer body (2) having a main conduit (2a), extending along the mixer body (2), having an opening (12) for issuing pressurised foam (40) or mixture comprising at least water, detergent and air;
the mixer body (2) has at least one conduit (3) for introducing water (7) under pressure and at least one conduit (5) for introducing a detergent product (6) in the main conduit (2a) or, alternatively, a single conduit (3) for introducing water (7) under pressure mixed with the detergent product (6) in the main conduit (2a);
the mixer body (2) has at least one conduit (9) for introducing compressed air (10) in a mixing chamber (15) positioned along the main conduit (2a) and in fluid communication with the emission opening (12);the mixing chamber (15) being configured to generate the above-mentioned pressurised foam (40) or mixture by interference of the flows of water (7), detergent product (6) and compressed air with the walls of the mixing chamber (15);
the device (1) comprising injection means (14) for injecting at least water (7) and detergent (6) in the mixing chamber (15);
**characterised in that**
the injection means (14) comprise at least a nozzle (16) for introducing at least the pressurised water (7) in the mixing chamber (15);
the injection means (14) are defined at least partly by a respective stretch (T) of the main conduit (2a) having a variable cross section with a diverging extension; the stretch (T) has an inlet opening (17) and an outlet opening (18) for at least water (7) and detergent (6); the cross section of the outlet opening (18) has a cross section larger than the cross section of the inlet opening (17); the stretch (T) placing in fluid communication the nozzle (16) with the mixing chamber (15).

2. The device according to claim 1, **characterised in that** the nozzle (16) is a body positioned along the main conduit (2a), extending along the main longitudinal axis of the main conduit (2a).

3. The device according to claim 1 or 2, **characterised in that** the nozzle (16) has a inlet opening (20), in fluid communication with the conduit (3) for introducing at least the pressurised water (7), and an outlet opening (21), in fluid communication with the mixing chamber (15), having a smaller cross section than the cross section of the inlet opening (20).

4. The device according to claim 1, **characterised in that** the stretch (T) leads directly into the mixing chamber (15); the cross section of the outlet opening (18) of the stretch (T) is less than the cross section the mixing chamber (15); more specifically, the cross section of the mixing chamber (15) has a diverging extension from the outlet opening (18) of the stretch (T), with reference to the direction of flow of the fluids.

5. The device according to any one of the preceding claims, **characterised in that** the mixer body (2) has a chamber (19) for inflow of at least the pressurised water (7) and the detergent (6), located upstream of the mixing chamber (15), with reference to the direction of flow of the fluids in the mixer body (2).

6. The device according to claim 5, **characterised in that** it comprises at least a conduit (9) for introducing the compressed air (10) inside the inflow chamber (19).

7. The device according to claim 1, **characterised in that** the stretch (T) is interposed between the inflow chamber (19) and the mixing chamber (15); the inlet opening (17) is in fluid communication with the inflow chamber (19) and the outlet opening (18) is in fluid communication with the mixing chamber (15).

8. The device according to any one of the preceding claims, **characterised in that** the mixer body (2) comprises one or more conduits (9) for introducing the compressed air (10) leading in the mixing chamber (15); the conduit (9) for introducing the compressed air (10) in the mixing chamber (15) is inclined relative to the longitudinal extension of the main conduit (2a) for introducing the air (10) according to a direction incident to the flow of water (7) and detergent (6) introduced in the mixing chamber (15).

9. The device according to claim 1, **characterised in that** the nozzle (16), the inflow chamber (19), the stretch (T) and the mixing chamber (15) extend along the longitudinal axis of main extension of the main conduit (2a).

10. A car wash system comprising the device (1) according to any one of claims 1 to 9, **characterised in that** the system comprises a dispensing lance (23) comprising at least one outlet conduit (25) having at its end a nozzle (24) configured to spray the foam (40) or mixture under pressure flowing out from the mixer body (2).

11. The system according to claim 10, **characterised in that** the nozzle (24) has a dispensing opening (24a) having a smaller cross section than the emission opening (12) of the mixer body (2); in particular, the dispensing opening (24a) of the nozzle (24) has a rectangular cross section for dispensing the foam according to a fan-style configuration.

12. The system according to claim 10 or 11, **characterised in that** the dispensing lance (23) comprises at least two outlet conduits (25) one of which has at its end the above-mentioned nozzle (24); the dispensing lance (23) comprising a trigger (26) which can be operated by the user for conveying the foam (40) or mixture under pressure flowing out from the mixer body (2) inside the outlet conduit (25) having the above-mentioned nozzle (24).

## Patentansprüche

1. Schaumspender, umfassend einen Mischerkörper (2) mit einer Hauptleitung (2a), die sich entlang des Mischerkörpers (2) erstreckt, mit einer Öffnung (12) zum Ausgeben von unter Druck stehendem Schaum (40) oder einer Mischung, die mindestens Wasser, Waschmittel und Luft umfasst;
der Mischerkörper (2) weist mindestens eine Leitung (3) zum Einleiten von Wasser (7) unter Druck und mindestens eine Leitung (5) zum Einleiten eines Waschmittelprodukts (6) in die Hauptleitung (2a) oder alternativ eine Einzelleitung (3) zum Einleiten von Wasser (7) unter Druck gemischt mit dem Waschmittelprodukt (6) in die Hauptleitung (2a) auf; der Mischerkörper (2) weist mindestens eine Leitung (9) zum Einleiten von Druckluft (10) in eine Mischkammer (15) auf, die entlang der Hauptleitung (2a) positioniert ist und in Fluidkommunikation mit der Abgabeöffnung (12) steht; wobei die Mischkammer (15) konfiguriert ist, um den oben erwähnten unter Druck stehenden Schaum (40) oder Mischung durch Interferenz der Ströme von Wasser (7), Waschmittelprodukt (6) und Druckluft mit den Wänden der Mischkammer (15) zu erzeugen;
wobei die Vorrichtung (1) Einspritzmittel (14) zum Einspritzen von mindestens Wasser (7) und Waschmittel (6) in die Mischkammer (15) umfasst;
**dadurch gekennzeichnet, dass** die Einspritzmittel (14) mindestens eine Düse (16) zum Einleiten mindestens des unter Druck stehenden Wassers (7) in die Mischkammer (15) umfassen;
die Einspritzmittel (14) sind zumindest teilweise durch ein jeweiliges Teilstück (T) der Hauptleitung (2a) mit variablem Querschnitt mit divergierender Erstreckung definiert; das Teilstück (T) weist eine Einlassöffnung (17) und eine Auslassöffnung (18) für mindestens Wasser (7) und Waschmittel (6) auf; der Querschnitt der Auslassöffnung (18) weist einen Querschnitt auf, der größer ist als der Querschnitt der Einlassöffnung (17); wobei das Teilstück (T) die Düse (16) mit der Mischkammer (15) in Fluidkommunikation platziert.

2. Vorrichtung nach Anspruch 1, **dadurch gekennzeichnet, dass** die Düse (16) ein Körper ist, der entlang der Hauptleitung (2a) positioniert ist und sich entlang der Hauptlängsachse der Hauptleitung (2a) erstreckt.

3. Vorrichtung nach Anspruch 1 oder 2, **dadurch gekennzeichnet, dass** die Düse (16) eine Einlassöffnung (20) in Fluidkommunikation mit der Leitung (3) zum Einleiten mindestens des unter Druck stehenden Wassers (7) und eine Auslassöffnung (21) in Fluidkommunikation mit der Mischkammer (15) mit einem kleineren Querschnitt als der Querschnitt der Einlassöffnung (20) aufweist.

4. Vorrichtung nach Anspruch 1, **dadurch gekennzeichnet, dass** das Teilstück (T) direkt in die Mischkammer (15) führt; der Querschnitt der Auslassöffnung (18) des Teilstücks (T) ist kleiner als der Querschnitt der Mischkammer (15); insbesondere weist der Querschnitt der Mischkammer (15) eine divergierende Erstreckung von der Auslassöffnung (18) des Teilstücks (T) in Bezug auf die Stromrichtung der Fluiden auf.

5. Vorrichtung nach einem der vorhergehenden Ansprüche, **dadurch gekennzeichnet, dass** der Mischerkörper (2) eine Kammer (19) zum Einströmen von mindestens dem unter Druck stehenden Wasser (7) und dem Waschmittel (6) aufweist, die sich stromaufwärts der Mischkammer (15) in Bezug auf die Stromrichtung der Fluiden im Mischerkörper (2) befindet.

6. Vorrichtung nach Anspruch 5, **dadurch gekennzeichnet, dass** sie mindestens eine Leitung (9) zum Einleiten der Druckluft (10) in die Einströmkammer (19) umfasst.

7. Vorrichtung nach Anspruch 1,**dadurch gekennzeichnet, dass** das Teilstück (T) zwischen der Einströmkammer (19) und der Mischkammer (15) angeordnet ist; die Einlassöffnung (17) steht in Fluidkommunikation mit der Einströmkammer (19) und die Auslassöffnung (18) ist in Fluidkommunikation mit der Mischkammer (15).

8. Vorrichtung nach einem der vorhergehenden Ansprüche, **dadurch gekennzeichnet, dass** der Mischerkörper (2) eine oder mehrere Leitungen (9) zum Einleiten der Druckluft, die in die Mischkammer (15) führen, umfasst; die Leitung (9) zum Einleiten der Druckluft (10) in die Mischkammer (15) ist relativ zur Längserstreckung der Hauptleitung (2a) zum Einleiten der Luft (10) gemäß einer Richtung, die auf den Strom von Wasser (7) und Waschmittel (6) einfällt, die in die Mischkammer (15) eingeleitet sind, geneigt.

9. Vorrichtung nach Anspruch 1, **dadurch gekennzeichnet, dass** sich die Düse (16), die Einströmkammer (19), das Teilstück (T) und die Mischkammer (15) entlang der Längsachse der Haupterstreckung der Hauptleitung (2a) erstrecken.

10. Autowaschsystem, umfassend die Vorrichtung (1) nach einem der Ansprüche 1 bis 9, **dadurch gekennzeichnet, dass** das System einen Spendeschlauch (23) umfasst, der mindestens eine Auslassleitung (25) aufweisend eine Düse (24) an ihrem Ende umfasst, die konfiguriert ist, um den Schaum (40) oder die Mischung unter Druck, der/die aus dem Mischerkörper (2) herausströmt, zu versprühen.

11. System nach Anspruch 10, **dadurch gekennzeichnet, dass** die Düse (24) eine Spendeöffnung (24a) mit einem kleineren Querschnitt als die Abgabeöffnung (12) des Mischerkörpers (2) aufweist; insbesondere weist die Spendeöffnung (24a) der Düse (24) einen rechteckigen Querschnitt zum Spenden des Schaums gemäß einer fächerartigen Konfiguration auf.

12. System nach Anspruch 10 oder 11, **dadurch gekennzeichnet, dass** der Spendeschlauch (23) mindestens zwei Auslassleitungen (25) umfasst, von denen eine an ihrem Ende die oben erwähnte Düse (24) aufweist; wobei der Spendeschlauch (23) einen Auslöser (26) umfasst, der vom Benutzer betätigt werden kann, um den Schaum (40) oder die Mischung unter Druck, der/die aus dem Mischerkörper (2) in die Auslassleitung (25) mit der oben erwähnten Düse (24) strömt, zu befördern.

## Revendications

1. Dispositif de distribution de mousse comprenant un corps de mélangeur (2) comportant un conduit principal (2a), se prolongeant le long du corps de mélangeur (2), comportant une ouverture (12) pour fournir une mousse (40) ou un mélange sous pression comprenant au moins de l'eau, du détergent et de l'air ;
le corps de mélangeur (2) comporte au moins un conduit (3) pour introduire de l'eau (7) sous pression et au moins un conduit (5) pour introduire un produit détergent (6) dans le conduit principal (2a) ou, sinon, un seul conduit (3) pour introduire de l'eau (7) sous pression mélangée au produit détergent (6) dans le conduit principal (2a) ;
le corps de mélangeur (2) comporte au moins un conduit (9) pour introduire de l'air comprimé (10) dans une chambre de mélange (15) positionnée le long du conduit principal (2a) et en communication fluidique avec l'ouverture d'émission (12) ; la chambre de mélange (15) étant configurée pour générer la mousse (40) ou le mélange sous pression susmentionné(e) par interférence des flux d'eau (7), de produit détergent (6) et d'air comprimé avec les parois de la chambre de mélange (15) ;
le dispositif (1) comprenant des moyens d'injection (14) pour injecter au moins de l'eau (7) et du détergent (6) dans la chambre de mélange (15) ; **caractérisé en ce que** les moyens d'injection (14) comprennent au moins une buse (16) pour introduire au moins l'eau sous pression (7) dans la chambre de mélange (15) ;
les moyens d'injection (14) sont définis au moins partiellement par une portion (T) respective du conduit principal (2a) comportant une section transversale variable avec une extension divergente ; la portion (T) comporte une ouverture d'entrée (17) et une ouverture de sortie (18) pour au moins l'eau (7) et le détergent (6) ; la section transversale de l'ouverture de sortie (18) comporte une section transversale plus grande que la section transversale de l'ouverture d'entrée (17) ; la portion (T) mettant en communication fluidique la buse (16) avec la chambre de mélange (15).

2. Dispositif selon la revendication 1, **caractérisé en ce que** la buse (16) est un corps positionné le long du conduit principal (2a) se prolongeant le long de l'axe longitudinal principal du conduit principal (2a).

3. Dispositif selon la revendication 1 ou 2, **caractérisé en ce que** la buse (16) comporte une ouverture d'entrée (20), en communication fluidique avec le conduit (3) pour introduire au moins l'eau sous pression (7), et une ouverture de sortie (21), en communication fluidique avec la chambre de mélange (15) comportant une section transversale plus petite que la section transversale de l'ouverture d'entrée (20).

4. Dispositif selon la revendication 1, **caractérisé en ce que** la portion (T) mène directement dans la chambre de mélange (15); la section transversale de l'ouverture de sortie (18) de la portion (T) est inférieure à la section transversale de la chambre de mélange (15); plus spécifiquement, la section transversale de la chambre de mélange (15) comporte une extension divergente à partir de l'ouverture de sortie (18) de la portion (T), en référence à la direction d'écoulement des fluides.

5. Dispositif selon l'une quelconque des revendications précédentes, **caractérisé en ce que** le corps de mélangeur (2) comporte une chambre (19) pour l'afflux au moins de l'eau sous pression (7) et du détergent (6), située en amont de la chambre de mélange (15), en référence au sens d'écoulement des fluides dans le corps de mélangeur (2).

6. Dispositif selon la revendication 5, **caractérisé en ce qu'**il comprend au moins un conduit (9) pour introduire de l'air comprimé (10) à l'intérieur de la chambre d'afflux (19).

7. Dispositif selon la revendication 1, **caractérisé en ce que** la portion (T) est interposée entre la chambre d'afflux (19) et la chambre de mélange (15); l'ouverture d'entrée (17) est en communication de fluide avec la chambre d'afflux (19) et l'ouverture de sortie (18) est en communication de fluide avec la chambre de mélange (15).

8. Dispositif selon l'une quelconque des revendications précédentes, **caractérisé en ce que** le corps de mélangeur (2) comprend un ou plusieurs conduits (9) pour introduire l'air comprimé (10) menant dans la chambre de mélange (15); le conduit (9) servant à introduire l'air comprimé (10) dans la chambre de mélange (15) est incliné par rapport à l'extension longitudinale du conduit principal (2a) servant à introduire l'air (10) selon une direction incidente à l'écoulement de l'eau (7) et du détergent (6) introduits dans la chambre de mélange (15).

9. Dispositif selon la revendication 1, **caractérisé en ce que** la buse (16), la chambre d'afflux (19), la portion (T) et la chambre de mélange (15) se prolongent le long de l'axe longitudinal de l'extension principale du conduit principal (2a).

10. Système de lavage de voitures comprenant le dispositif (1) selon l'une quelconque des revendications 1 à 9, **caractérisé en ce que** le système comprend une lance de distribution (23) comprenant au moins un conduit de sortie (25) comportant à son extrémité une buse (24) configurée pour pulvériser la mousse (40) ou le mélange sous pression sortant du corps de mélangeur (2).

11. Système selon la revendication 10, **caractérisé en ce que** la buse (24) comporte une ouverture de distribution (24a) comportant une section transversale plus petite que l'ouverture d'émission (12) du corps de mélangeur (2); en particulier, l'ouverture de distribution (24a) de la buse (24) comporte une section transversale rectangulaire pour distribuer la mousse selon une configuration en éventail.

12. Système selon la revendication 10 ou 11, **caractérisé en ce que** la lance de distribution (23) comprend au moins deux conduits de sortie (25) dont l'un comporte à son extrémité la buse (24) mentionnée ci-dessus ; la lance de distribution (23) comprenant une gâchette (26) pouvant être actionnée par l'utilisateur pour acheminer la mousse (40) ou le mélange sous pression sortant du corps de mélangeur (2) à l'intérieur du conduit de sortie (25) comportant la buse (24) mentionnée ci-dessus.
